# EUROPÄISCHE PATENTANMELDUNG

(11) **EP 2 009 766 A2**
(43) Veröffentlichungstag der Anmeldung: **31.12.2008**
(21) Anmeldenummer: 08010664.4
(22) Anmeldetag: 12.06.2008
(51) Int. Cl.: H02K 1/27

(54) **Motor für Trommelwaschmaschine**

(30) Priorität: 26.06.2007 DE 102007029562
(71) Anmelder: Miele & Cie. KG, 33332 Gütersloh (DE)
(72) Erfinder: Esch, Günter, 53937 Schleiden (DE); Rode, Peter, Dr., 53881 Euskirchen (DE)

(57) **Zusammenfassung**

Die Erfindung betrifft einen Motor (7) für eine Trommelwaschmaschine (1) mit einem Gehäuse (4), einem darin schwingbeweglich aufgehängten Laugenbehälter (2) mit einem Lagergehäuse (8), welches innerhalb eines Mittelabschnitts einer Rückwand (6) des Laugenbehälters (2) angeordnet ist, und einer Trommel (3), welche drehbar innerhalb des Laugenbehälters (2) mit einer Welle (9) im Lagergehäuse (8) gelagert ist, umfassend einen an der Rückwand (8) oder einem Halteteil (8a) befestigten Stator (10) und einen an der Trommelwelle (9) fixierten Rotor (12), um die Antriebskraft vom Motor (7) zur Trommel (3) zu übertragen, wobei der Rotor (12) ein topfförmiges Gehäuse mit einem Hohlzylinderabschnitt (16) umfasst, auf dessen Innenseite Permanentmagnete (17) und ein magnetischer Rückschluss (18) aus magnetisch leitendem Material zwischen der Innenseite des Hohlzylinderabschnitts (16) und den Permanentmagneten (17) angebracht sind. Um zu verhindern, dass im Rotor Spannungen aufgrund von unterschiedlichen Materialausdehnungen bei Wärme auftreten, ist der magnetische Rückschluss als umlaufender Streifen (18) an der Innenseite des Hohlzylinderabschnitts (16) angeordnet, wobei der Streifen (18) zumindest eine einen Schlitz (19) bildende Unterbrechung aufweist, die sich im Mittenbereich eines Permanentmagneten (17) befindet.

## Beschreibung

Die Erfindung betrifft einen Motor für eine Trommelwaschmaschine mit einem Gehäuse, einem darin schwingbeweglich aufgehängten Laugenbehälter mit einem Lagergehäuse, welches innerhalb eines Mittelabschnitts einer Rückwand des Laugenbehälters angeordnet ist, und einer Trommel, welche drehbar innerhalb des Laugenbehälters mit einer Welle im Lagergehäuse gelagert ist, umfassend einen an der Rückwand oder an einem Halteteil befestigten Stator und einen an der Trommelwelle fixierten Rotor, um die Antriebskraft vom Motor zur Trommel zu übertragen, wobei der Rotor ein topfförmiges Gehäuse mit einem Hohlzylinderabschnitt umfasst, auf dessen Innenseite Permanentmagnete und ein magnetischer Rückschluss aus magnetisch leitendem Material zwischen der Innenseite des Hohlzylinderabschnitts und den Permanentmagneten angebracht sind.

Für den Antrieb der Trommel in Waschmaschinen sind unterschiedliche Motoren bekannt. Häufig wird der Motor außenseitig unterhalb des Laugenbehälters befestigt, der die Antriebskraft über einen Riementrieb zur Trommelwelle überträgt. Eine andere Möglichkeit ist, die Trommelwelle direkt anzutreiben, so dass die Trommelwelle gleichzeitig die rotierende Welle des Motors ist. Diese sogenannten Direktantriebe haben den Vorteil, dass sie wenig Platz benötigen und ferner durch den Wegfall des Riementriebs auch weniger Verschleißteile vorhanden sind.

Ein Motor für eine direkt angetriebene Trommelwaschmaschine ist aus der EP 1 439 254 A2 bekannt. Die Trommelwaschmaschine besitzt ein Gehäuse mit einem darin schwingbeweglich aufgehängten Laugenbehälter mit einem Lagergehäuse, welches innerhalb eines Mittelabschnitts einer Rückwand des Laugenbehälters angeordnet ist. Innerhalb des Laugenbehälters ist eine Trommel mit einer Welle drehbar gelagert. Der Motor ist mit seinem Stator an der Rückwand befestigt, wobei der Rotor an der Trommelwelle fixiert ist, um die Antriebskraft vom Motor zur Trommel zu übertragen. Der Rotor umfasst ein topfförmiges Gehäuse mit einem Hohlzylinderabschnitt, auf dessen Innenseite Permanentmagnete angebracht sind. Das topfförmige Gehäuse ist aus tiefgezogenem Stahl hergestellt und bildet mit seinem zylindrischen Abschnitt den magnetischen Rückschluss. Beim Rotor aus Stahl sind jedoch hinsichtlich der Formgebung Grenzen gesetzt, er kann beispielsweise bei großen Durchmessern instabil werden. Ferner ist bei der Materialauswahl auf die Tauglichkeit zum Tiefziehen zu achten, so dass die magnetischen Eigenschaften nur zweitrangig berücksichtigt werden können.

Aus der DE 102 54 286 A1 ist es bekannt, in den Hohlzylinderabschnitt einen magnetisch leitenden, ringförmigen Streifen anzubringen, der den magnetischen Rückschluss für die Permanentmagnete bereitstellt. Mit dieser Maßnahme ist die Materialauswahl für das Rotorgehäuse unabhängig von den magnetischen Eigenschaften, wobei hier als Material Aluminium bzw. eine Alu-Legierung verwendet wird, die im Spritzgussverfahren verarbeitet wird. Es hat sich jedoch gezeigt, dass die Befestigung des Rückschlussringes manchmal schwierig ist, da sich die Materialien unterschiedlich bei Wärme ausdehnen. Deshalb muss der Rückschlussring sehr genau mit geringen Maßabweichungen hergestellt werden und das Einsetzen in das Rotorgehäuse kann nur bei einer im Wesentlichen konstanten Temperatur erfolgen. Das unterschiedliche Verhalten bei Wärme kann auch im Betrieb, wenn der Motor warm wird, zu unerwünschten Spannungen innerhalb des Rotorgehäuses führen.

Aus der DE 199 39 061 A1 ist ein Rotor für einen Elektromotor für eine direkt angetriebene Trommelwelle bekannt. Hierbei wird der streifenförmige, magnetische Rückschluss segmentiert ausgeführt, und in einem Befestigungsabschnitt des Rotors angebracht. Das Anbringen erfolgt im Spritzgießverfahren, wobei der Befestigungsabschnitt selbst aus dem spritzgegossenen Kunststoff ausgeführt ist. Bei der Verwendung von Kunststoffmaterial kann es aufgrund von thermischen Belastungen im Laufe der Zeit zur Aushärtung bzw. Versprödung kommen, wodurch die Haltbarkeit für dieses mechanisch stark belastete Bauteil nachlässt.

Der Erfindung liegt somit die Aufgabe zugrunde, einen Motor für eine Trommelwaschmaschine mit direkt angetriebener Trommelwelle zu verbessern.

Die Aufgabe wird durch einen Motor mit den Merkmalen des Anspruchs 1 gelöst. Bevorzugte Ausführungen ergeben sich aus den nachfolgenden abhängigen Ansprüchen.

Der wesentliche Vorteil des erfindungsgemäßen Motors ist, dass der Rotor einfach herzustellen ist und die Zuverlässigkeit verbessert wird. Es werden Spannungen innerhalb des Rotorgehäuses vermieden bzw. zumindest vermindert, die sich aufgrund unterschiedlicher Wärmeausdehnungskoeffizienten der verwendeten Materialien ergeben. Ferner ist es möglich, Toleranzen hinsichtlich der Maße des Rotorgehäuses und der Magnete auszugleichen. Die Montage gestaltet sich ebenfalls sehr einfach, da der streifenförmige magnetische Rückschluss durch den Spalt im Durchmesser etwas veränderbar ist und somit einfach an den inneren Durchmesser des Hohlzylinderabschnitts des Rotorgehäuses anpassbar ist.

Erfindungsgemäß ist vorgesehen, dass der magnetische Rückschluss als umlaufender Streifen an der Innenseite des zylindrischen Hohlzylinderabschnitts angeordnet ist, wobei der Streifen zumindest eine einen Schlitz bildende Unterbrechung aufweist, die sich im Mittenbereich eines Permanentmagnetes befindet. Der Spalt kann hierbei in gewissen Grenzen unterschiedlich breit sein, ohne dass die Funktion und Leistungsfähigkeit des Motors nachteilig beeinflusst wird. Die magnetischen Feldlinien verlaufen vom Magnet ausgehend zu den Polen der jeweils benachbarten Magnete. Daraus ergibt sich der vorteilhafte Umstand, dass mittig hinter jedem Magneten keine Feldlinien in Verlaufsrichtung des Rückschussringes verlaufen, so dass die Unterbrechung in diesem Bereich kaum oder keine Auswirkungen auf den Verlauf der Feldlinien hat.

In einer vorteilhaften Weiterbildung besteht der magnetische Rückschluss aus mehreren streifenförmigen, magnetisch leitenden Segmenten. Die Enden der Segmente bilden jeweils einen Schlitz, der sich im Mittenbereich eines Permanentmagnetes befindet. Hierbei kann die Spaltbildung hinter mehreren Magneten aufgeteilt werden, so dass ein zu großer Spalt an einer Stelle vermieden wird. Außerdem ist die Herstellung von streifenförmigen Segmenten sehr einfach. Durch die Vielzahl der Spalte zwischen den einzelnen Segmenten ergibt sich ein weiterer Vorteil. Der magnetische Fluss tritt mit den an dem jeweiligen Segment angebrachten Magneten in Verbindung, da der erhöhte magnetische Widerstand am Spalt die Ausbreitung des magnetischen Flusses in Umfangsrichtung verhindert bzw. zumindest vermindert. Unerwünschte Streueffekte zu weiteren Magneten werden mit der Segmentierung des magnetischen Rückschlusses vermieden bzw. zumindest vermindert.

In einer zweckmäßigen Weiterbildung beträgt das Verhältnis von Magneten und magnetisch leitenden Segmenten 4:1. Das bedeutet, dass bei einem Motor mit 40 oder mehr Blockmagneten 10 streifenförmige Segmente an der Innenseite des Hohlzylinderabschnitts angeordnet werden.

In einer zweckmäßigen Ausführung ist der Schlitz so bemessen, dass er eine Breite von 0,01 bis 1 mm hat. Damit wird sichergestellt, dass der magnetische Fluss über den Rückschlussring nicht bzw. zumindest nur unwesentlich beeinflusst wird. Für die Funktion des Motors hat eine solche Schlitzbreite keinen nennenswerten Einfluss.

In einer weiteren, vorteilhaften Ausführung ist streifenförmig, magnetisch leitendes Material auf die Innenseite des Hohlzylinderabschnitts geklebt. Damit wird ein dauerhafter und zuverlässiger Halt an der Innenseite des Hohlzylinderabschnitts bereitgestellt, wobei der Kleber in der Lage ist, Verschiebungen des Streifens, die sich aufgrund der unterschiedlichen Wärmeausdehnungskoeffizienten ergeben, aufzunehmen, wodurch Spannungen im Rotorgehäuse erst gar nicht entstehen.

Es ist insgesamt zweckmäßig, dass das Gehäuse des Rotors bzw. zumindest der Hohlzylinderabschnitt aus einem Aluminium-Material und das streifenförmig, magnetisch leitende Material aus Stahl besteht. Aluminium ist bestens geeignet, eine stabile Form des Rotorgehäuses bereitzustellen und für den Rückschluss kann eine Stahlsorte mit guter magnetischer Leitfähigkeit verwendet werden.

Ein Ausführungsbeispiel der Erfindung ist in den Zeichnungen rein schematisch dargestellt und wird nachfolgend näher beschrieben. Es zeigen:
- Fig. 1:: eine Waschmaschine mit direkt angetriebener Trommel in einer skizzierten Schnittdarstellung;
- Fig. 2:: den Rotor des Motors;
- Fig. 3:: einen vergrößerten Ausschnitt des Rotors und
- Fig. 4:: den Verlauf der magnetischen Feldlinien in einer skizzierten Detailansicht.

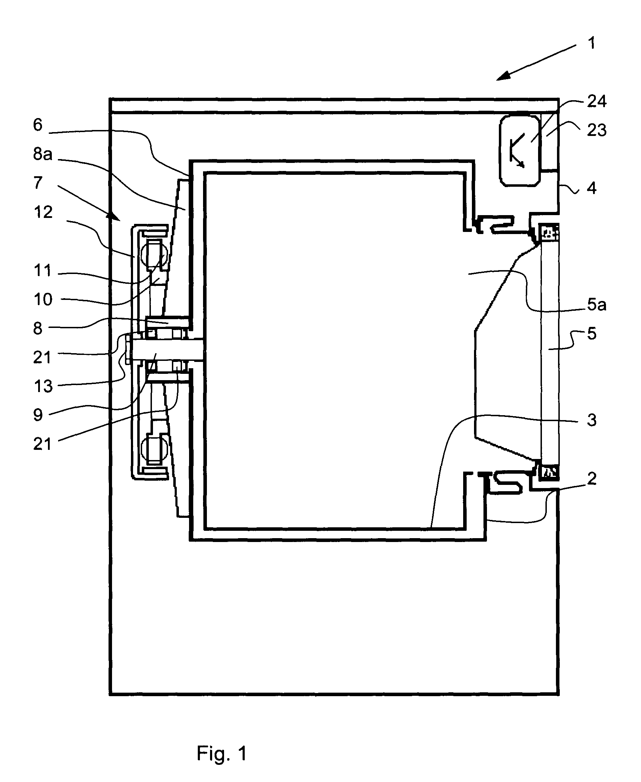

In Fig. 1 ist in rein schematischer Darstellung eine Waschmaschine 1 mit einem Laugenbehälter 2 und einer darin drehbar gelagerten Trommel 3 dargestellt. Die Positions- und Richtungsangaben beziehen sich auf die betriebsgemäße Aufstellposition der Waschmaschine 1. Die Trommel 3 wird mit Hilfe des Motors 7 direkt angetrieben, die die im Laugenbehälter 2 oder in der Trommel 3 befindliche Wäsche bewegt. Die Trommel 3 ist im vorliegenden Ausführungsbeispiel aus Edelstahl hergestellt und mit einer Vielzahl an Öffnungen für die Durchflutung versehen. An der Laugenbehälterrückwand 6 ist im mittleren oder zentralen Bereich ein Lagergehäuse 8 befestigt, in dem die Lager 21 für die an der Trommel 3 befestigten Trommelwelle 9 eingesetzt sind. Im unteren Bereich des Laugenbehälters 2 befindet sich die Waschflüssigkeit, welche zum Reinigen oder Behandeln der Wäsche benötigt wird. Zur Erwärmung oder zum Erhitzen der Flüssigkeit ist im unteren Bereich des Laugenbehälters 2 ein Heizkörper (nicht dargestellt) angeordnet. Der Laugenbehälter ist innerhalb des Gehäuses 4 der Waschmaschine 1 schwingend aufgehängt und hat eine Beladungsöffnung 5a, die durch die Tür 5 verschließbar ist. Der Motor 7 besitzt einen Stator 10 mit einer Statorwicklung 11, der an der Rückwand 6, am Lagergehäuse 8 oder an einem mit der Rückwand 6 verbundenen Halteteil 8a befestigt ist. Der Rotor 12 ist an der Trommelwelle 9 befestigt, hier mit einer Schraube 13. Der Motor 7 ist als Außenläufer aufgebaut, das bedeutet, dass der Rotor 12 mit den aus Permanentmagneten 17 gebildeten Rotorpolen um den Stator 10 läuft. Mit einem Frequenzumrichter 22 oder einem anderen Leistungsteil wird der Motor 7 bzw. die Statorwicklung 11 des Motors 7 bestromt, der wiederum von einem Steuerteil 23 gesteuert wird, wobei das Steuerteil 23 den Programmablauf für die Wäschebehandlung steuert.

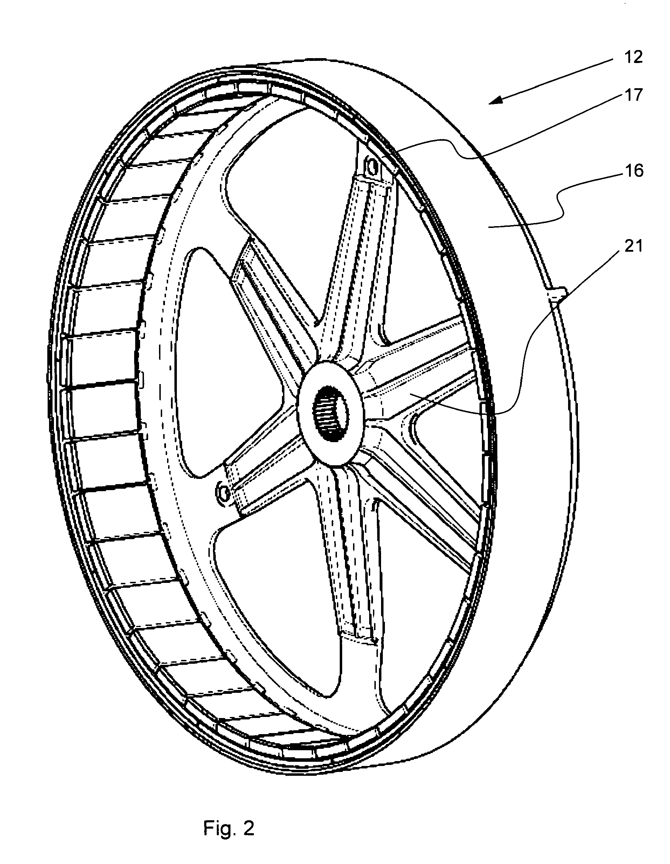

Fig. 2 zeigt den Rotor 12 in einer Einzelansicht. Der Rotor 12 besteht hierbei aus einem topfförmigen Gehäuse, welches einen Hohlzylinderabschnitt 16 umfasst. Der Topfboden ist hierbei mit Speichen 21 ausgeführt, so dass eine gute Belüftung des Stators 10 (Fig. 1) mit der Statorwicklung 11 bereitgestellt wird.

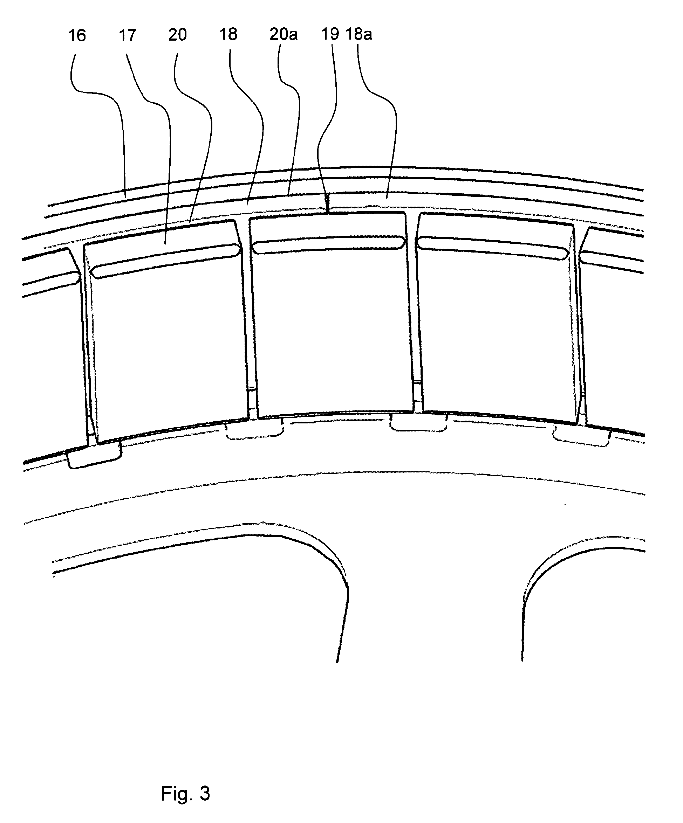

In der Detailansicht gemäß Fig. 3 ist zu erkennen, dass am Innenumfang des Hohlzylinderabschnitts ein streifenförmiges, magnetisch leitendes Segment 18 als magnetischer Rückschluss befestigt ist. Auf diesem Rückschluss 18 sind wiederum die Permanentmagnete 17 befestigt. Zur Befestigung der Magnete 17 ist zwischen dem Magnet 17 und dem magnetischen Rückschluss 18 eine Klebschicht 20 angebracht. Zur Befestigung des magnetischen Rückschlusses bzw. des streifenförmigen, magnetisch leitenden Segments 18 ist an der Innenseite des Hohlzylinderabschnitts 16 ebenfalls eine Klebschicht 20a angebracht. Die streifenförmigen Segmente 18, 18a sind so innerhalb des Hohlzylinderabschnitts 16 platziert, dass sich der Schlitz 19 zwischen dem Segment 18 und dem benachbarten Segment 18a mittig bzw. zumindest in etwa mittig hinter einem Permanentmagneten 17 befindet.

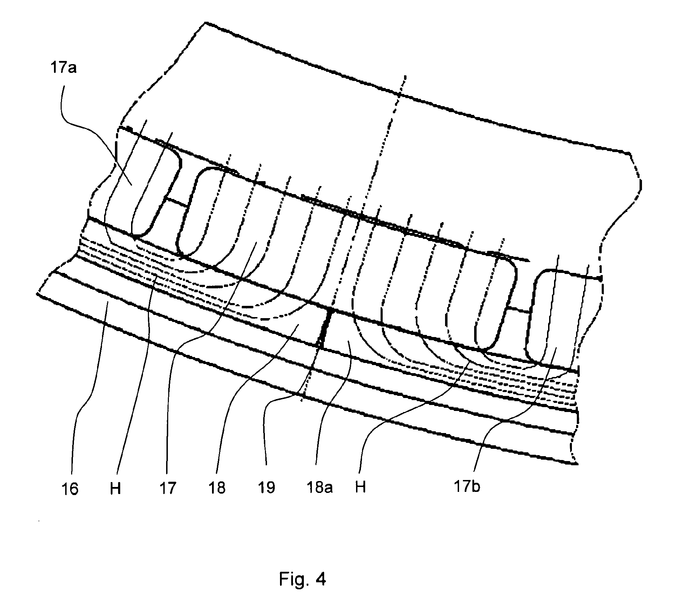

In Fig. 4 ist in einer Schnittdarstellung der Verlauf der magnetischen Feldlinien im Motor aufzkizziert. Ausgehend vom Magnet 17 verlaufen die Feldlinien über das streifenförmige Segment 18 zu den jeweils benachbarten Magneten 17a und 17b. Hierbei ist zu erkennen, dass jeweils im Mittenbereich auf der dem Hohlzylinderabschnitt 16 zugewandten Seite der Magneten 17 keine Feldlinien in Umfangsrichtung des Hohlzylinderaschnitts 16 verlaufen. Deshalb kann an dieser Stelle der Schlitz 19 platziert werden, der sich aus zwei benachbarten streifenförmigen Segmenten 18 und 18a ergibt. An dieser Stelle hat der erhöhte magnetische Widerstand, der sich durch den Abstand zwischen den Segmenten 18, 18a ergibt, keine Auswirkungen auf die Leistungsfähigkeit oder Effizienz des Motors 7.

Der Motor 7 ist auch dazu geeignet, die Trommel in einem Waschtrockner anzutreiben.

## Patentansprüche

1. Motor (7) für eine Trommelwaschmaschine (1) mit einem Gehäuse (4), einem darin schwingbeweglich aufgehängten Laugenbehälter (2) mit einem Lagergehäuse (8), welches innerhalb eines Mittelabschnitts einer Rückwand (6) des Laugenbehälters (2) angeordnet ist, und einer Trommel (3), welche drehbar innerhalb des Laugenbehälters (2) mit einer Welle (9) im Lagergehäuse (8) gelagert ist, umfassend einen an der Rückwand (8) oder an einem Halteteil (8a) befestigten Stator (10) und einen an der Trommelwelle (9) fixierten Rotor (12), um die Antriebskraft vom Motor (7) zur Trommel (3) zu übertragen, wobei der Rotor (12) ein topfförmiges Gehäuse mit einem Hohlzylinderabschnitt (16) umfasst, auf dessen Innenseite Permanentmagnete (17) und ein magnetischer Rückschluss (18) aus magnetisch leitendem Material zwischen der Innenseite des Hohlzylinderabschnitts (16) und den Permanentmagneten (17) angebracht sind,
**dadurch gekennzeichnet,**
**dass** der magnetische Rückschluss als umlaufender Streifen (18) an der Innenseite des Hohlzylinderabschnitts (16) angeordnet ist, wobei der Streifen (18) zumindest eine einen Schlitz (19) bildende Unterbrechung aufweist, die sich im Mittenbereich eines Permanentmagnetes (17) befindet und dass das streifenförmige, magnetisch leitende Material (18) auf der Innenseite des Hohlzylinderabschnitts (16) geklebt ist.

2. Motor (7) für eine Trommelwaschmaschine (1) nach Anspruch 1
**dadurch gekennzeichnet,**
**dass** der magnetische Rückschluss aus mehreren streifenförmigen, magnetisch leitenden Segmenten (18, 18a) besteht, die sich mit ihren Enden unter Bildung eines Schlitzes (19) jeweils im Mittenbereich eines Permanentmagneten (17) befinden.

3. Motor (7) für eine Trommelwaschmaschine (1) nach Anspruch 2
**dadurch gekennzeichnet,**
**dass** das Verhältnis von Magneten (17) und magnetisch leitenden Segmenten (18) 4:1 beträgt.

4. Motor (7) für eine Trommelwaschmaschine (1) nach einem der Ansprüche 1 bis 3
**dadurch gekennzeichnet,**
**dass** der Schlitz (19) eine Breite von 0,01 bis 1 mm hat.

5. Motor (7) für eine Trommelwaschmaschine (1) nach einem der Ansprüche 1 bis 3
**dadurch gekennzeichnet,**
**dass** das Gehäuse des Rotors (12) bzw. zumindest der Hohlzylinderabschnitt (16) aus einem Aluminium-Material und das streifenförmige, magnetisch leitende Material (18) aus Stahl besteht.
